# EUROPEAN PATENT APPLICATION

(11) **EP 4 815 344 A1**
(43) Date of publication of application: **30.09.2026**
(21) Application number: 26166273.8
(22) Date of filing: 20.03.2026
(51) Int. Cl.: H04B 10/85

(54) **SECURE OPTICAL FREQUENCY COMB (OFC), TWO-WAY OPTICAL TIME TRANSFER (TWOTT) SYSTEM AND ASSOCIATED METHOD**

(30) Priority: 25.03.2025 US 202519089055
(71) Applicant: Eagle Technology, LLC, Melbourne, FL 32919 (US); Arizona Board of Regents on Behalf of the University of Arizona, Tucson, AZ 85713 (US)
(72) Inventor: BULLOCK, Michael S., Tucson, 85701 (US); KNARR, Samuel H., Melbourne, 32940 (US); BURT, Timothy C., Webster, 14580 (US); BUCKLEW, Victor G., Richmond, 23235 (US); BASH, Boulat A., Tucson, 85721 (US)
(74) Representative: Schmidt, Steffen J.

(57) **Abstract**

An optical frequency comb (OFC), two-way optical time transfer (TWOTT) system **120** may include a first node having a first OFC transmitter **150** that generates a first modulated OFC signal **152** over an optical path **126** based on a first random sequence **154,** a first OFC detector **156** that detects a second modulated OFC signal **160** over the optical path, and a first processor **164** coupled to the first OFC detector. A second node **134** may include a second OFC transmitter **168** that generates the second modulated OFC signal **160** over the optical path **126** based on a second random sequence **170,** a second OFC detector **172** that detects the first modulated OFC signal **152** over the optical path, and a second processor **174** coupled to the second OFC detector **172.** The first and second processors **164,174** may communicate over a public channel path **124** to determine a man-in-the-middle (MITM) attack along the optical path **126.**

## Description

### Field of the Invention

The present invention relates to the field of optical time transfer systems, and, more particularly, to a secure optical frequency comb (OFC), two-way optical time transfer (TWOTT) system that determines a man-in-the-middle (MITM) attack and related methods.

### Background of the Invention

Remote clock synchronization is important to maintain accurate time in satellite communications, navigation systems, scientific experiments, distributed computer operations, network security and synchronization, and similar systems. Two-way optical time transfer (TWOTT) clock synchronization has been used to synchronize clocks between remote locations requiring high precision. TWOTT is considered superior to other techniques of remote clock synchronization, such as the Network Time Protocol (NTP), Precision Time Protocol (PTP), the Global Positioning System (GPS), and Two-Way Satellite Time and Frequency Transfer (TWSTFT).

TWOTT achieves high precision due to its two-way communication, where in some systems the optical signal travels from one location to another and back again, thus, cancelling many types of errors caused by signal delays in the transmission medium because both legs of the journey are affected equally. More often, and specifically for a TWOTT system using an optical frequency comb (OFC), the optical signals are generated at both sites independently and propagate over the same channel, or approximately the same channel in opposite directions. TWOTT also reduces environmental impact when using optical fibers, and achieves independence from external systems, since it does not rely on satellite systems, such as GPS.

An advanced technique of optical TWOTT incorporates an OFC, known as OFC-TWOTT, which generates a spectrum of precise, equally spaced frequency lines that operate as a ruler for measuring optical frequencies with accuracy. An OFC as part of a TWOTT system provides greater timing accuracy than traditional TWOTT because the OFC provides a large number of discrete, stable reference frequencies that improve synchronization precision to the femtosecond level with broadband capability. The OFCs cover a broad range of frequencies and may overcome noise to permit multiplexing of signals and simultaneous transmission of multiple channels of information. There is also improved resolution because the OFC enables more accurate measurement of time intervals and better characterizes the transmission channel, leading to improved synchronization. The OFC can also be used in different applications beyond time transfer and synchronization. For example, OFC may be used in spectroscopy, metrology, and communications, and integrated into chip-scale devices for more compact and portable systems.

OFC-TWOTT, however, may suffer from a lack of security. It may be vulnerable to man-in-the-middle (MITM) attacks, which may compromise mission or application outcomes and the fidelity and accuracy of clock synchronization. Common protocols used to secure clock synchronization are not readily applicable to OFC-TWOTT because of its high level of precision. Also, data modulation on top of the OFC may degrade the protocol and the precision of the protocol itself. A more secure OFC-TWOTT system having an enhanced security protocol is desirable.

### Summary of the Invention

An optical frequency comb (OFC), two-way optical time transfer (TWOTT) system may comprise a first node having a first OFC transmitter configured to generate a first modulated OFC signal over an optical path based on a first random sequence. A first OFC detector may be configured to detect a second modulated OFC signal over the optical path, and a first processor may be coupled to the first OFC detector. A second node may comprise a second OFC transmitter that may be configured to generate the second modulated OFC signal over the optical path based on a second random sequence. A second OFC detector may be configured to detect the first modulated OFC signal over the optical path, and a second processor may be coupled to the second OFC detector. The first and second processors may be configured to communicate over a public channel path to determine a man-in-the-middle (MITM) attack along the optical path.

The second OFC detector may be configured to generate first detected modulation information from the first modulated OFC signal. The second processor may be configured to send the first detected modulation information over the public channel to the first processor. The first processor may be configured to compare the first detected modulation information with actual modulation information from the first OFC transmitter. The first OFC detector may be configured to generate second detected modulation information from the second modulated OFC signal. The first processor may be configured to send the second detected modulation information over the public channel to the second processor. The second processor may be configured to compare the second detected modulation information with actual modulation information from the second OFC transmitter.

The first OFC transmitter may be configured to modulate an optical degree of freedom based on the first random sequence. The second OFC transmitter may be configured to modulate the optical degree of freedom based on the second random sequence. The optical degree of freedom may comprise pulse polarization. The optical degree of freedom may comprise pulse phase. The first and second processors may be configured to communicate coarse timing signals over the public channel. The optical path may comprise an optical fiber path. The optical path may comprise a free space path.

An OFC-TWOTT method may comprise operating a first node comprising a first OFC transmitter configured to generate a first modulated OFC signal over an optical path based on a first random sequence, a first OFC detector configured to detect a second modulated OFC signal over the optical path, and a first processor coupled to the first OFC detector. The method may include operating a second node comprising a second OFC transmitter configured to generate the second modulated OFC signal over the optical path based on a second random sequence, a second OFC detector configured to detect the first modulated OFC signal over the optical path, and a second processor coupled to the second OFC detector. The method may further include operating the first and second processors to communicate over a public channel path to determine a MITM attack along the optical path.

### Brief Description of the Drawings

Other objects, features and advantages of the present invention will become apparent from the detailed description of the invention which follows, when considered in light of the accompanying drawings in which:
FIG. 1 is a block diagram of a conventional OFC-TWOTT system showing its functional operation.
FIG. 2 is another block diagram of the OFC-TWOTT system of FIG. 1 showing a MITM attack.
FIG. 3 is a schematic block diagram of the OFC-TWOTT system of FIG. 2 showing how optical pulses may be delayed or advanced in the MITM attack.
FIG. 4 is a chart showing when different MITM attacks may be detectable or undetectable by measuring round trip time.
FIG. 5 is a block diagram of the OFC-TWOTT system that determines a MITM attack in accordance with the invention.
FIG. 6 is a schematic block diagram of the OFC-TWOTT system of FIG. 5 showing an example modulated optical degree of freedom as pulse polarization.
FIG. 7 is a graph showing an example of the probability of successful detections in a MITM attack based on the number of checked pulse polarizations.
FIG. 8 is a graph showing an example of the probability of missed detections in a MITM attack based on the number of checked pulse polarizations.
FIG. 9 is an example high-level flowchart of an OFC-TWOTT method in accordance with the invention.

### Detailed Description

The present description is made with reference to the accompanying drawings, in which exemplary embodiments are shown. However, many different embodiments may be used, and thus, the description should not be construed as limited to the particular embodiments set forth herein. Rather, these embodiments are provided so that this disclosure will be thorough and complete. Like numbers refer to like elements throughout, and prime notation is used to indicate similar elements in different embodiments.

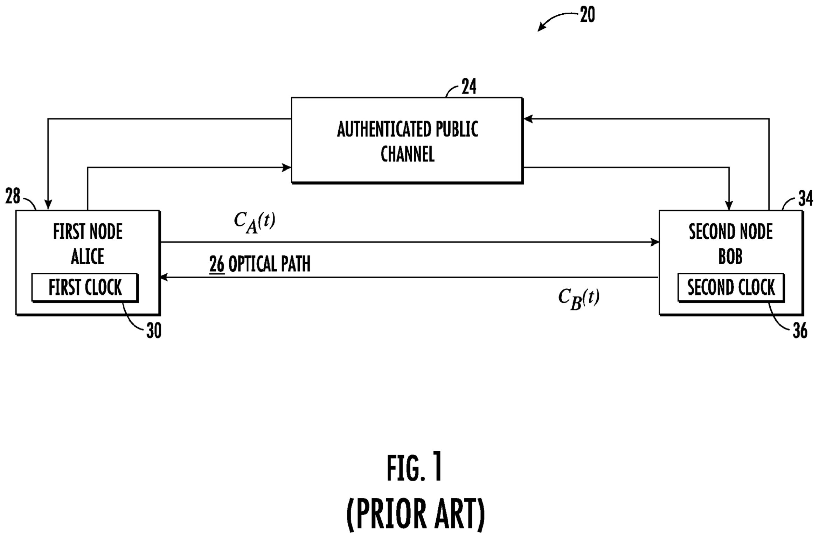

Referring to FIG. 1, there is illustrated a simplified block diagram of a conventional OFC-TWOTT system **20** showing how synchronizing spatially separated clocks may work. The authenticated public channel **24** is used for coarse synchronization and communication of timing estimates. A first node **28,** referred to as Alice, includes a first clock **30.** A spatially separated second node **34,** referred to as Bob, includes a second clock **36.** An optical path **26,** such as an optical fiber path or free-space path, extends between the first and second nodes **28,34.** The distance between the first and second nodes **28,34** may vary, for example, from a short distances of a few meters as in a local area computer network, or up to thousands of kilometers from each other.

Alice at the first node **28** sends the OFC (C_{A}(*t*)) over the optical path **26** to Bob at the second node **34,** which sends its OFC (C_{B}(*t*)) over the optical path to Alice at the first node **28.** Alice and Bob at respective first and second nodes **28,34** process the received OFCs using either an LOS (Linear Optical Sampling) or HTD (Heterodyne Timing Discriminator) algorithm. In the LOS algorithm for processing the OFCs, the clocks are swept by adding a small frequency offset, which may be used to measure phase differences and obtain a timing estimate. In the HTD algorithm, the heterodyne timing discrimination uses a "tracking" or "reference" clock that locks to the incoming signal by generating an error signal and using this to discipline the reference and characterize changes in timing. Other protocols may be used as known to those skilled in the art.

Alice and Bob as the respective first and second nodes **28,34** mix their optical frequency combs with the ones they receive and send the results over the public channel **24** to calculate the synchronization error between their clocks **30,36.** The careful labeling and manipulation of the estimated offsets removes channel delay and produces a better estimate of the synchronization error, Δt_{AB}, which may correspond to 1/2 (T_{AA} - T_{AB} - T_{BB} + T_{BA}), where the T_{AA} refers to the time of transmission from Alice, the T_{BB} refers to the time of transmission from Bob, the T_{AB} refers to the time of arrival of Alice's signal at Bob, and the T_{BA} refers to the time of arrival of Bob's signal at Alice. The values for the times of transmission and times of arrival may be derived from the LOS/HTD algorithms described above.

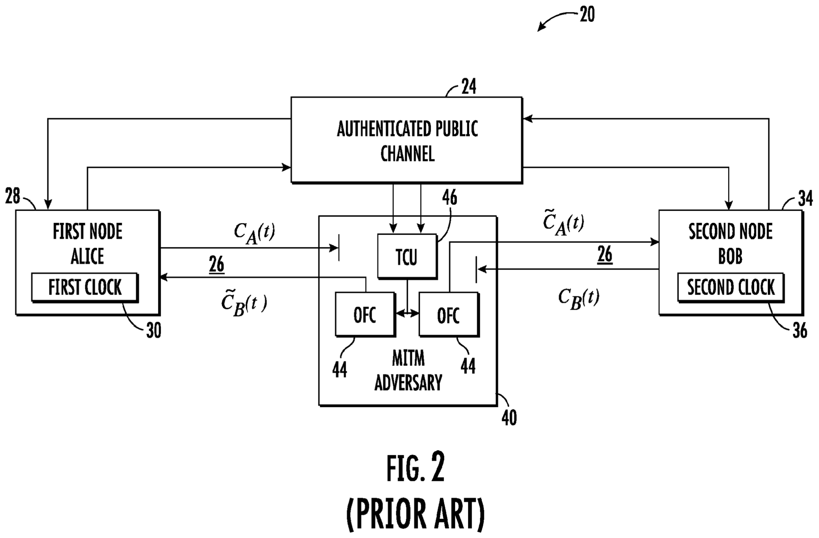

Referring now to FIG. 2, the security vulnerability based on a MITM **40** attack on this conventional OFC-TWOTT system **20** is illustrated. The authenticated public channel **24** as noted before is used for coarse synchronization and communication of timing estimates. The MITM **40** as an adversary monitoring this public channel will not affect the OFC accuracy. However, in this conventional OFC-TWOTT system **20,** nothing can stop an attack from the MITM **40** if the MITM replaces OFCs. Without a change to any OFC protocol, the MITM **40** may make detection of its interference difficult, while degrading the time synchronization performance up to the coarse synchronization level. Depending on the technique used for coarse synchronization on the authenticated public channel **24,** the error could be 100 nanoseconds or greater.

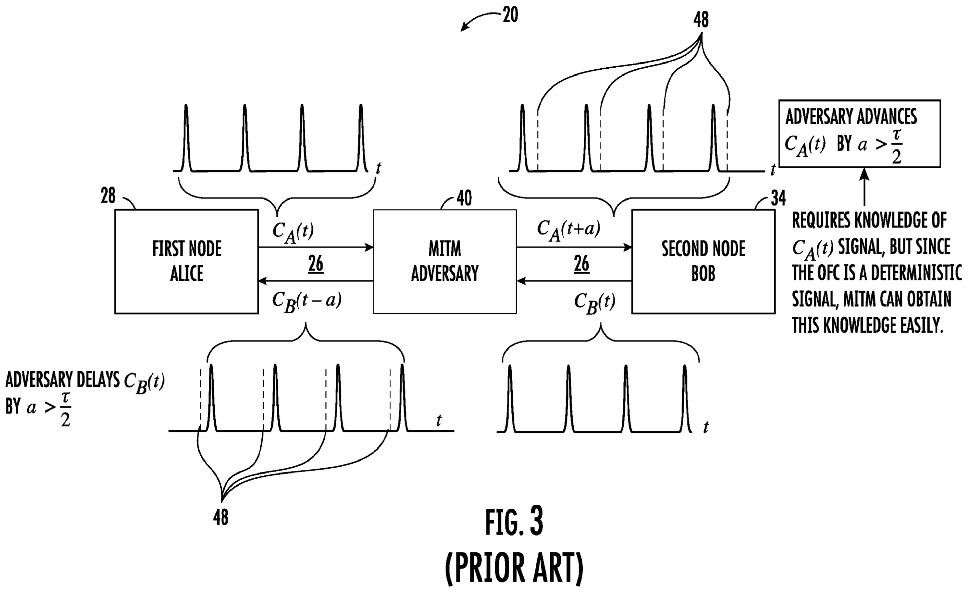

The MITM **40** may have one or more optical frequency detectors, generators and/or converters shown generally by the blocks labeled OFC **44,** which integrate respective Alice and Bob communications, and a timing control unit (TCU) **46** operable with the OFC's **44.** The adversary as the MITM **40** may delay OFC signals or advance OFC signals as illustrated in the signal timing peaks of the schematic block diagram in FIG. 3. To advance an OFC signal requires knowledge of the signal. Because an OFC is a deterministic signal, the MITM **40** may obtain knowledge of the OFC signal. The dashed signal peak lines **48** in FIG. 3 show where the OFC signal would have been, but for the delay or the advance. The delay is shown in the lower left of the first node **28** as Alice, and the advance is shown at the upper right of the second node **34** as Bob.

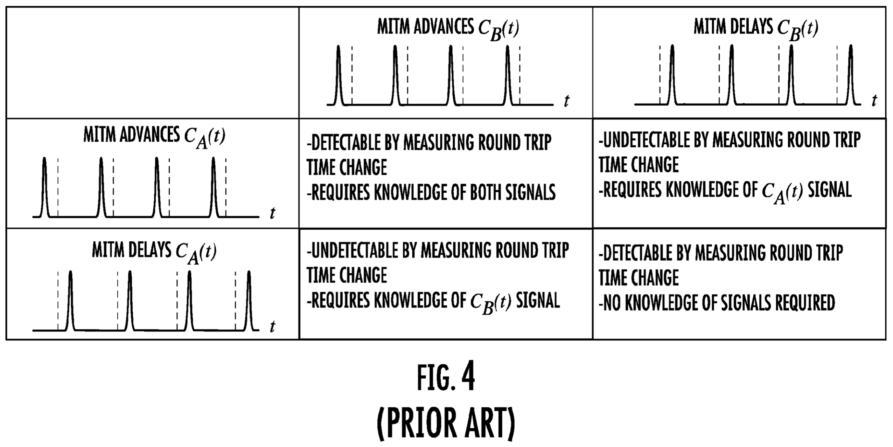

The chart in FIG. 4 illustrates the vulnerabilities in the conventional OFC-TWOTT systems **20** where MITM **40** attacks are detectable by measuring the roundtrip time change. If the MITM **40** advances the OFC signal from Alice as the first node **28** and the OFC signal from Bob at the second node **34** or delays those OFC signals, the MITM **40** attack is detectable by the conventional OFC-TWOTT system **20** by measuring the change in roundtrip time. If the MITM **40** delays an OFC signal and advances the other, however, the OFC signals are undetectable by measuring the roundtrip time due to this asymmetric attack, and because it requires knowledge of the signal being advanced. Measuring the roundtrip time will not thwart the MITM **40** attack in this case.

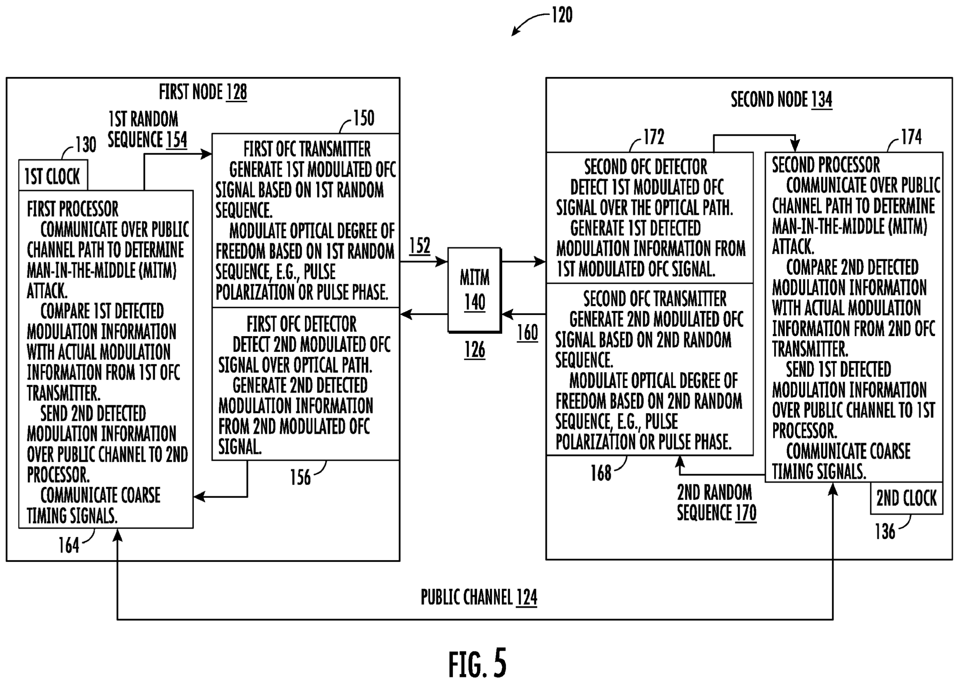

Referring now to FIG. 5, there is shown a block diagram of the OFC-TWOTT system **120** that determines a MITM **140** attack along the optical path **126,** in this example, an optical fiber path extending between first and second nodes **128,134.** As illustrated, the first node **128** corresponding to Alice includes a first OFC transmitter **150** that is configured to generate a first modulated OFC signal **152** over the optical path **126** based on a first random sequence **154.** A first OFC detector **156** is configured to detect a second modulated OFC signal **160** over the optical path **126.** A first processor **164,** such as a digital signal processor (DSP) module, is coupled to the first OFC detector **156,** and in this example, also coupled to the first OFC transmitter **150** for processing and generating the first random sequence **154** for the first modulated OFC signal **152** and process the second modulated OFC signals **160.** A first clock **130** is operative with the first processor **164.**

The second node **134** corresponding to Bob includes a second OFC transmitter **168** configured to generate the second modulated OFC signal **160** over the optical path **126** based on a second random sequence **170.** A second OFC detector **172** is configured to detect the first modulated OFC signal **152** over the optical path **126.** A second processor **174,** such as a DSP processor, is coupled to the second OFC detector **172,** and in this example, also generates the second random sequence **170** for the second modulated OFC signal **160.** A second clock is operative with the second processor **174.** The first and second processors **164,174** communicate over the authenticated public channel path **124** to determine a MITM **140** attack along the optical path **126.** The first and second processers **164,174** are also configured to communicate coarse timing signals over the authenticated public channel **124.** The optical path **126** may be formed as an optical fiber path or may be a free-space optical path.

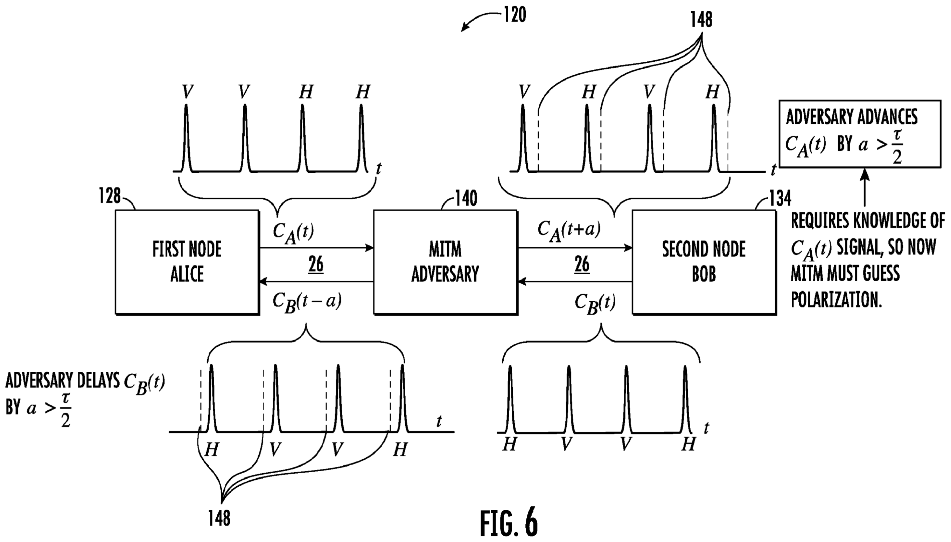

The first OFC transmitter **150** may be configured to modulate an optical degree of freedom based on the first random sequence **154.** The second OFC transmitter **168** may also be configured to modulate the optical degree of freedom based on the second random sequence **170.** In an example, the optical degree of freedom is a pulse polarization as shown in the schematic block diagram of FIG. 6 with the pulses labeled vertical (V) or horizontal (H) for the polarizations.

In another example, the optical degree of freedom is a pulse phase. For example, the phase of the optical pulse may be adjusted based on the instantaneous value of the modulating signal at the OFC, resulting in a continuously changing phase across the pulse duration. An example is a Pulse Position Modulation (PPM) where the position of the pulse within a fixed time window is adjusted, effectively changing the phase relative to a reference point. If the phase of the pulse changes literally over time, then the resulting "chirp" is the modulation, and pulse compression techniques may be used.

Referring again to FIG. 5, the second OFC detector **172** may be configured to generate first detected modulation information, such as the optical degree of freedom from the first modulated OFC signal **152.** The second processor **174** may be configured to send the first detected modulation information over the public channel **124** to the first processor **164,** which compares the first detected modulation information with actual modulation information from the first OFC transmitter **150.** Likewise, the first OFC detector **156** may be configured to generate second detected modulation information from the second modulated OFC signal **160.** The first processor **164** is configured to send the second detected modulation information over the public channel **124** to the second processor **174,** which is configured to compare the second detected modulation information with actual modulation information from the second OFC transmitter **168.**

As shown in the schematic block diagram of FIG. 6 illustrating different OFC optical pulses between the first and second nodes **128,134** as respective Alice and Bob, the first modulated OFC signal **152** generated from the first node **128** as Alice has a corresponding polarization for the illustrated four pulses as vertical, vertical, horizontal, horizontal. The MITM **140** may advance the OFC signal with the dashed signal peak lines **148** showing where the OFC signal would have been, but for the delay or advance. Because the MITM **40** requires knowledge of the OFC signal, the MITM must guess the polarization. In this example, the MITM **140** guessed wrongly with the polarization pulses, with wrong guesses illustrated as vertical, horizontal, vertical, and horizontal, which do not match the correct vertical, vertical, horizontal, and horizontal as transmitted from Alice as the first node **28.**

In operation, Alice and Bob, at the respective first and second nodes **128,134,** may agree on a degree of freedom to modulate and make this knowledge public. Alice and Bob may each generate its random sequence locally to use as a modulating signal on their OFC carriers. Alice and Bob may synchronize via the optical frequency carriers and record a demodulated random sequence. Alice and Bob then may announce the random sequence for some "n" previous time instances over the authenticated public channel **124.** When Alice and Bob disagree on more than a percentage of instances, they declare the detection of the MITM **140** attack. This percentage indicative of error as a MITM **40** attack may be determined by a demodulation error probability and a desired MITM **140** detection sensitivity.

The polarization modulation may be desirably fast enough to change before the MITM **140** can detect pulses and change their polarization. When the pulse repetition rate is slow, the MITM **140** may be able to measure the incoming polarization and match it on the outgoing pulse, making synchronization precision worse. For that reason, the repetition rate may be desirably fast enough to prevent the MITM **140** from measuring incoming polarization.

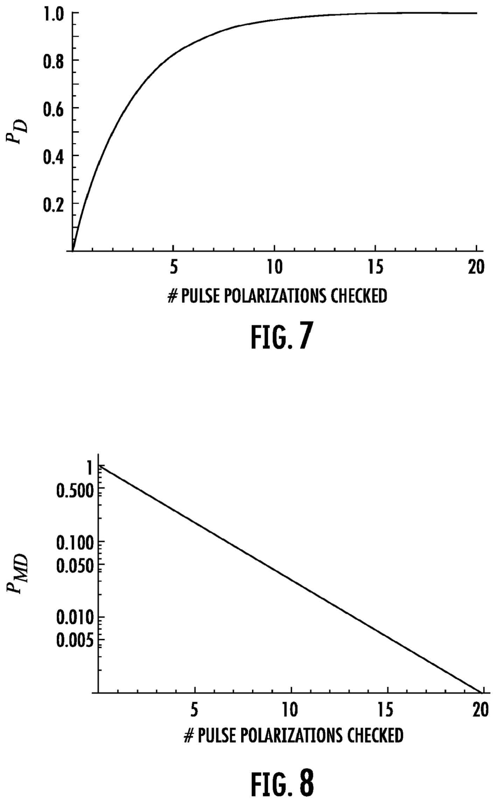

Referring now to the graphs in FIGS. 7 and 8, the number of optical pulse polarizations that are checked is shown on the horizontal axis of each graph, while P_{D} in FIG. 7 is the probability of successful detection by Alice at the first node **128** and Bob at the second node **134** of a MITM **140** attack. P_{MD} in the graph of FIG. 8 is the probability of misdetection by Alice at the first node **128** and Bob at the second node **134** of the MITM **140** attack. The MITM **140** goal is to tamper with the clock synchronization. Passive eavesdropping does not impact mission integrity and the system may be continuously run in the background to verify security of time transfer information.

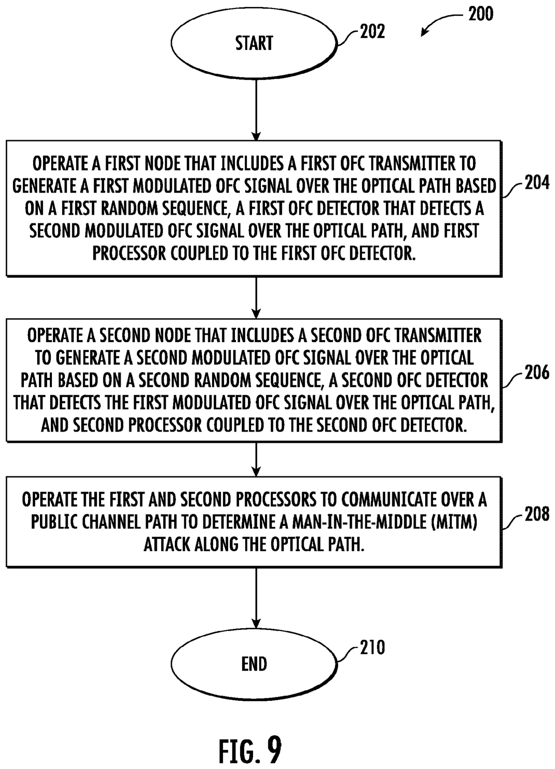

Referring now to FIG. 9, there is illustrated at **200** a high-level flowchart of an OFC-TWOTT method using the OFC-TWOTT system **120** shown in FIG. 5. The process starts (Block **202)** by operating a first node **128** that includes a first OFC transmitter **150** that generates a first modulated OFC signal **152** over an optical path **126** based on a first random sequence **154,** a first OFC detector **156** configured to detect a second modulated OFC signal **160** over the optical path, and a first processor **164** coupled to the first OFC detector (Block **204).** The method further includes operating a second node **134** having a second OFC transmitter **168** configured to generate a second modulated OFC signal **160** over the optical path **126** based on a second random sequence **170,** a second OFC detector **172** configured to detect the first modulated OFC signal **152** over the optical path, and a second processor **174** coupled to the second OFC detector (Block **206).** The first and second processors **164,174** operate to communicate over the public channel path **124** to determine a MITM **140** attack along the optical path **126** (Block **208).** The process ends (Block **210).**

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. An optical frequency comb (OFC), two-way optical time transfer (TWOTT) system comprising:
a first node comprising
a first OFC transmitter configured to generate a first modulated OFC signal over an optical path based on a first random sequence,
a first OFC detector configured to detect a second modulated OFC signal over the optical path, and
a first processor coupled to the first OFC detector; and
a second node comprising
a second OFC transmitter configured to generate the second modulated OFC signal over the optical path based on a second random sequence,
a second OFC detector configured to detect the first modulated OFC signal over the optical path, and
a second processor coupled to the second OFC detector;
the first and second processors configured to communicate over a public channel path to determine a man-in-the-middle (MITM) attack along the optical path.

2. The OFC-TWOTT system of claim 1, wherein the second OFC detector is configured to generate first detected modulation information from the first modulated OFC signal, and wherein the second processor is configured to send the first detected modulation information over the public channel to the first processor.

3. The OFC-TWOTT system of claim 2, wherein the first processor is configured to compare the first detected modulation information with actual modulation information from the first OFC transmitter.

4. The OFC-TWOTT system of claim 3, wherein the first OFC detector is configured to generate second detected modulation information from the second modulated OFC signal, and wherein the first processor is configured to send the second detected modulation information over the public channel to the second processor.

5. The OFC-TWOTT system of claim 4, wherein the second processor is configured to compare the second detected modulation information with actual modulation information from the second OFC transmitter.

6. The OFC-TWOTT system of claim 1, wherein the first OFC transmitter is configured to modulate an optical degree of freedom based on the first random sequence; and wherein the second OFC transmitter is configured to modulate the optical degree of freedom based on the second random sequence; and/or
wherein the first and second processors are configured to communicate coarse timing signals over the public channel; and/or
wherein the optical path comprises an optical fiber path.

7. The OFC-TWOTT system of claim 6, wherein the optical degree of freedom comprises pulse polarization; and/or
wherein the optical degree of freedom comprises pulse phase.

8. An optical frequency comb (OFC), two-way optical time transfer (TWOTT) system comprising:
a first node comprising
a first OFC transmitter configured to generate a first polarization-modulated OFC signal over an optical fiber path based on a first random sequence,
a first OFC detector configured to detect a second polarization-modulated OFC signal over the optical fiber path, and
a first processor coupled to the first OFC detector; and
a second node comprising
a second OFC transmitter configured to generate the second polarization-modulated OFC signal over the optical path based on a second random sequence,
a second OFC detector configured to detect the first polarization-modulated OFC signal over the optical fiber path, and
a second processor coupled to the second OFC detector;
the first and second processors configured to communicate over a public channel path to determine a man-in-the-middle (MITM) attack along the optical fiber path.

9. The OFC-TWOTT system of claim 8, wherein the second OFC detector is configured to generate first detected polarization-modulation information from the first modulated OFC signal, and wherein the second processor is configured to send the first detected polarization-modulation information over the public channel to the first processor; and/or
wherein the first and second processors are configured to communicate coarse timing signals over the public channel.

10. The OFC-TWOTT system of claim 9, wherein the first processor is configured to compare the first detected polarization-modulation information with actual polarization-modulation information from the first OFC transmitter.

11. The OFC-TWOTT system of claim 10, wherein the first OFC detector is configured to generate second detected polarization-modulation information from the second polarization-modulated OFC signal, and wherein the first processor is configured to send the second detected polarization-modulation information over the public channel to the second processor; or
wherein the second processor is configured to compare the second detected polarization-modulation information with actual polarization-modulation information from the second OFC transmitter.

12. An optical frequency comb (OFC), two-way optical time transfer (TWOTT) method comprising:
operating a first node comprising
a first OFC transmitter configured to generate a first modulated OFC signal over an optical path based on a first random sequence,
a first OFC detector configured to detect a second modulated OFC signal over the optical path, and
a first processor coupled to the first OFC detector; and
operating a second node comprising
a second OFC transmitter configured to generate the second modulated OFC signal over the optical path based on a second random sequence,
a second OFC detector configured to detect the first modulated OFC signal over the optical path, and
a second processor coupled to the second OFC detector;
operating the first and second processors to communicate over a public channel path to determine a man-in-the-middle (MITM) attack along the optical path.

13. The OFC-TWOTT method of claim 12, wherein the second OFC detector is configured to generate first detected modulation information from the first modulated OFC signal, and wherein the second processor is configured to send the first detected modulation information over the public channel to the first processor; or
wherein the first processor is configured to compare the first detected modulation information with actual modulation information from the first OFC transmitter; or
wherein the first OFC detector is configured to generate second detected modulation information from the second modulated OFC signal, and wherein the first processor is configured to send the second detected modulation information over the public channel to the second processor; or
wherein the second processor is configured to compare the second detected modulation information with actual modulation information from the second OFC transmitter.

14. The OFC-TWOTT method of claim 12, wherein the first OFC transmitter is configured to modulate an optical degree of freedom based on the first random sequence; and wherein the second OFC transmitter is configured to modulate the optical degree of freedom based on the second random sequence; and/or
wherein the first and second processors are configured to communicate coarse timing signals over the public channel; and/or
wherein the optical path comprises an optical fiber path.

15. The OFC-TWOTT method of claim 14, wherein the optical degree of freedom comprises at least one of a pulse polarization and a pulse phase.
